# EUROPEAN PATENT APPLICATION

(11) **EP 2 868 459 A1**
(43) Date of publication of application: **06.05.2015**
(21) Application number: 13191074.7
(22) Date of filing: 31.10.2013
(51) Int. Cl.: B29C 70/44, B29C 70/70, B29C 44/12

(54) **A method of producing an article from composite materials**

(71) Applicant: Rigas Tehniska Universitate, 1658 Riga (LV)
(72) Inventor: Urbahs, Aleksandrs, LV-1029 Riga (LV); Savkovs, Konstantins, LV-1001 Riga (LV); Petrovs, Vladimirs, LV-1029 Riga (LV); Urbaha, Margarita, LV-1029 Riga (LV); Jakovlevs, Aleksandrs, LV-5701 Ludza (LV)
(74) Representative: Vitina, Maruta

(57) **Abstract**

The invention relates to the methods of producing articles from composite materials and may be used for producing lightweight articles with irregular shape (complicated 3D configuration), for example, wing elements of unmanned microclass aerial vehicle, parts of gliders, model aircrafts, boats, vessels, and prototypes of all kinds. The method of producing an article, which includes a core element and a shell from composite materials, comprises the following steps: forming the shell, containing reinforcing material impregnated with an epoxy resin, in a mould; filling the inner space of the formed shell with plastic closed-cell foam pellets wetted by the epoxy resin mixed with a curing agent, closing the mould and curing the epoxy resin to form a cellular structure, which fills the voids, not occupied by the plastic foam pellets only partially and bonds the said plastic foam pellets together and bonds the core element to the shell.

## Description

The invention relates to the methods of producing articles from composite materials and may be used for producing lightweight articles with irregular shape (complicated 3D configuration), for example, wing elements of unmanned microclass aerial vehicle, parts of gliders, model aircrafts, boats, vessels, and prototypes of all kinds.

Articles of such kind usually comprise an outer shell (skin) that operates mainly in tension and compression, forms a predetermined shape of the article (including aerodynamical) and is made from high strength reinforced plastics (for example, fiberglass plastic, kevlar, carbon-plastic (CFRP) etc.). In order to counteract the loss of shape of the article due to buckling and folding of the shell caused by the influence of shear forces and bending moments, supplementary strength elements (strengthening ribs, stringers on the shell) and the supporting elements (ribs, longerons) are introduced in the construction of the article. It is often required to produce the shell with larger thickness in order to improve its contact strength in areas between the strength elements.

Another group of methods of producing articles from composite materials comprise manufacturing of core element from lightweight foam material (by hot-wire foam cutter using templates, or by 3D milling) and its subsequent pasting with a resin impregnated fabrics (fiberglass, Kevlar, carbon) to form a shell. Thereafter, the necessary holes for wires, rods, tubes and other functional elements are made additionally in the foam. These methods are mainly used for elements with 2D curvature and it is difficult to apply them to elements with 3D curvature. It is also more difficult to precisely replicate the inner dimensions of the element when the core element is pasted with a resin impregnated fabric.

There is known the method of making a composite structure [Patent Application Publication GB2041829A] comprising: introducing hollow spheres into a first thermosetting resin and curing the resin to form a rigid core element including encapsulated hollow spheres distributed throughout the resin so that the density of the core element is substantially equal throughout its cross-section; overlaying the core element with a resilient open-cell foam material impregnated with a second thermosetting resin; overlaying the open-cell foam material with a layer of reinforcing material; compressing the open-cell foam material and the layer of reinforcing material on the core element to substantially reduce the thickness of the open cell foam material, and to thereby substantially fill the open-cells and extrude excess of second resin from the compressed foam material; and curing the second thermosetting resin during said compression so that the extruded second resin bonds the open-cell foam material to the core element and to the layer of reinforcing material. The first thermosetting resin and the second thermosetting resin may be epoxy resin with curing agent. One of the typical materials of the mentioned hollow spheres is polystyrene and each hollow sphere preferably has an external diameter in the range of 10 to 200 microns. The rigid core element preferably comprises the hollow spheres from 20 to 50 parts by weight for 100 parts by weight of the continuous resin phase.

However, the known method is complicated and the composite structure obtained has a relatively high density because the rigid core element is formed in such a way that the first thermosetting resin, in which the hollow spheres are distributed, fills all volume between the said hollow spheres.

Consequently, the technical problem to be solved consists in creating composite structures of a less density retaining their strength. This problem is solved by the present invention which is directed to a simple method of producing irregularly shaped articles of lightweight composite materials.

In a method of producing an article, which includes a core element and a shell from composite materials, comprising the steps of:
- introducing lightweight particles into an epoxy resin and curing the resin to form a rigid core element containing the lightweight particles, distributed throughout the epoxy resin,
- forming the shell, containing reinforcing material impregnated with an epoxy resin, according to the present invention,
   at first the shell is formed in a mould,
   then the inner space of the formed shell is filled with plastic closed-cell foam pellets wetted by the epoxy resin mixed with a curing agent,
   the mould is closed and
   the epoxy resin is cured forming a cellular structure, which fills the voids, not occupied by the plastic foam pellets only partially and bonds the said plastic foam pellets together and bonds the core element to the shell. The formed fine cellular structure of the epoxy resin with the introduced plastic closed-cell foam pellets has sufficient compression strength and impact resistance, and it effectively supports the shell. As a result, the produced irregularly shaped article of lightweight composite materials has good technological and operational characteristics.

The used plastic closed-cell foam pellets are preferably ball-like and have an average external diameter in a range of 2 to 10 millimeters and the epoxy resin mixed with a curing agent is used in amount of 0.02 to 0.04 grams per cm³ of the inner space of the shell. The plastic closed-cell foam pellets usually are produced in a ball-like form. Experimentally it was determined that the average external diameter of the plastic closed-cell foam ball-like pellets in a range of 2 to 10 millimeters provides uniform filling of the inner space of the formed shell with the mentioned pellets and a proper distribution thereof especially in regions with a low radius of curvature. If the epoxy resin mixed with a curing agent is used in amount of 0.02 to 0.04 grams per cm³ of the inner space of the shell, it is enough to wet the ball-like pellets with an average external diameter in a range of 2 to 10 millimeters practically completely and to form a lightweight composite material with a fine cellular structure.

The plastic closed-cell foam pellets may be filled in the inner space of the formed shell without compression. The inner space of the formed shell may be filled with the plastic closed-cell foam pellets wetted by the epoxy resin mixed with a curing agent and the mould may be closed with compressing of the said pellets so that the uncompressed bulk volume of the plastic closed-cell foam pellets filled in the inner space of the formed shell exceeds the volume of the inner space of the formed shell by no more than 40%. The compression improves the filling of the formed shell and enlarges the bonding area of the plastic closed-cell foam pellets.

The inner space of the formed shell may be filled with the plastic closed-cell foam pellets varying their external diameter depending on the radius of curvature and the distance from the shell (smaller pellets are used closer to the shell).

During the filling the inner space of the formed shell with the plastic closed-cell foam pellets wetted by the epoxy resin mixed with a curing agent, additional functional inner elements may be placed into positions designed and suitable for them. After the epoxy resin is cured, these elements, for example, wires, rods, tubes will be fixed in their positions.

The proposed method of producing an article may be realized as described in the following examples being not only possible.

### Example 1

At first a shell is formed in a mould. A fiberglass fabric is impregnated with an epoxy resin, which is mixed with a curing agent. The impregnated fiberglass fabric is laid up in the mould by hand and then the epoxy resin is cured. The inner space of the formed shell is 300 cm³ and it has an irregular shape.

400 cm³ (a bulk volume) of ball-like polystyrene closed-cell foam pellets with an average external diameter of 5 millimeters and density of 0.01351 g/ cm³ is wetted by 9,21 g of epoxy resin mixed with a curing agent.

Then the inner space of the formed shell is filled with all the said pellets wetted by the epoxy resin mixed with a curing agent and the mould is closed compressing the said pellets. The said pellets fill the inner space of the formed shell uniformly. The uncompressed bulk volume (400 cm³⁾ of the plastic closed-cell foam pellets filled in the inner space of the formed shell exceeds the volume (300 cm³) of the inner space of the formed shell by 33.3 %. The mould stays closed until the epoxy resin is cured forming a cellular structure, which fills the voids not occupied by the plastic foam pellets only partially and bonds the said plastic foam pellets together and bonds the core element to the shell. Density of the inner core element is 0.04617 g/ cm³.

### Example 2

At first a shell is formed in a mould. A fiberglass fabric is impregnated with an epoxy resin, which is mixed with a curing agent. The impregnated fiberglass fabric is laid up in the mould by hand. The inner space of the formed shell is 400 cm³ and it has an irregular shape. The epoxy resin is not cured before filling the formed shell.

400 cm³ (a bulk volume) of ball-like polystyrene closed-cell foam pellets with an average external diameter of 5 millimeters and density of 0.01351 g/ cm³ is wetted by 9.21 g of epoxy resin mixed with a curing agent.

Then the inner space of the formed shell is filled with all the said pellets wetted by the epoxy resin mixed with a curing agent and the mould is closed without compressing the said pellets. The mould stays closed until the epoxy resin is cured forming a cellular structure, which fills the voids not occupied by the plastic foam pellets only partially and bonds the said plastic foam pellets together and bonds the core element to the shell. Density of the inner core element is 0.034625 g/ cm³.

## Claims

1. A method of producing an article, which includes a core element and a shell from composite materials, comprising the following steps:
- introducing lightweight particles into an epoxy resin and curing the resin to form a rigid core element containing the lightweight particles, distributed throughout the epoxy resin,
- forming the shell, containing reinforcing material impregnated with an epoxy resin,
**characterized in that**
at first the shell is formed in a mould,
then the inner space of the formed shell is filled with the plastic closed-cell foam pellets wetted by the epoxy resin mixed with a curing agent,
the mould is closed and
the epoxy resin is cured forming a cellular structure, which fills the voids not occupied by the plastic foam pellets only partially and bonds the said plastic foam pellets together and bonds the core element to the shell.

2. The method according to claim 1 **characterized in that** the plastic closed-cell foam pellets are ball-like and have an average external diameter in a range of 2 to 10 millimeters and the epoxy resin mixed with a curing agent is used in amount of 0.02 to 0.04 grams per cm³ of the inner space of the shell.

3. The method according to claim 1 or 2 **characterized in that** the inner space of the formed shell is filled with the plastic closed-cell foam pellets wetted by the epoxy resin mixed with a curing agent and the mould is closed compressing the said pellets so that the uncompressed bulk volume of the plastic closed-cell foam pellets filled in the inner space of the formed shell exceeds the volume of the inner space of the formed shell by no more than 40%.

4. The method according to any of the preceding claim **characterized in that** the inner space of the formed shell is filled with the plastic closed-cell foam pellets varying their external diameter.

5. The method according to any of the preceding claim **characterized in that** during the filling the inner space of the formed shell with the plastic closed-cell foam pellets wetted by the epoxy resin mixed with a curing agent, additional functional inner elements are placed into positions designed and suitable for them.
